Europäisches Patentamt

**European Patent Office**

**Office européen des brevets**

(19)

(11) Publication number: **0 228 439 B1**

(12) **EUROPEAN PATENT SPECIFICATION**

(45) Date of publication of patent specification: **04.03.92** (51) Int. Cl.5: **H04M 1/66**

(21) Application number: **86904253.1**

(22) Date of filing: **25.06.86**

(86) International application number:
**PCT/GB86/00368**

(87) International publication number:
**WO 87/00376 (15.01.87 87/01)**

(54) **TELEPHONE LINE ACCESS CONTROL.**

(30) Priority: **28.06.85 GB 8516398**

(43) Date of publication of application:
**15.07.87 Bulletin 87/29**

(45) Publication of the grant of the patent:
**04.03.92 Bulletin 92/10**

(84) Designated Contracting States:
**AT BE CH DE FR GB IT LI LU NL SE**

(56) References cited:
**EP-A- 0 126 496**
**DE-A- 3 312 625**
**GB-A- 1 579 873**
**GB-A- 2 086 187**

(73) Proprietor: **NEWELL, Terence, John**
**271 Clarendon Park Road**
**Leicester(GB)**

(72) Inventor: **NEWELL, Terence, John**
**271 Clarendon Park Road**
**Leicester(GB)**

(74) Representative: **SERJEANTS**
**25, The Crescent King Street**
**Leicester, LE1 6RX(GB)**

## Description

### Field of Invention

The invention relates to telephone line access control, including devices and systems, for use in restricting the use of telephones to authorised persons or to restrict the kind of use which may be made of the telephones.

### Background of the Invention

In this specification and claims certain terms are for convenience used in a generic sense even though there may be more specific meanings.

The term 'line' refers usually to the actual telephone line but should be construed for the purpose of this Application as including any channel accessable to a user for transmitting signals.

The line is part of a network which includes telephones and exchange and covers part of the line internally of and externally of a building.

'Seizing' and 'releasing' of a line normally results from the actual lifting of a handset out of or into a cradle, but these terms should also be construed to cover any manner in which a line can be influenced to prepare it for signal transmission through the network or to end such preparation. 'Seizing' and 'releasing' can hence also be effected electronically, for example through MODEMs.

'Dialling' normally refers to the actual turning of a dial or the keying in on a push button pad following line seizure. The term is to be construed as covering any manner of inputting numerical data into the telecommunication network, whether it be a dialling code or any other numerical input, whether pulse or frequency encoded. The term 'dialling' covers voice or other remote operation and extends to numerical codes not part of the usual dialling codes.

In modern telecommunications practice telephones may be equipped for direct dialling out without using an operator or internal exchange. Thus there is no monitoring of outgoing calls and there is risk of abuse.

Telephone line access control systems are known from US 4,346,264, GB 2,123,254 and GB 2,133,250. These known systems may be difficult to install, require telephone modification or involve use limitations.

US 4,346,264 (Sharrit) restricts pre-selected and pre-programmed prohibited numbers. There is no general restriction on all outgoing calls. Prohibited numbers can be called by waiting a set period and then dialling an access code. During this time a load is turned ON so as to prevent transmission of the access code to the network. After dialling of the access code the load is removed, the line can be seized and a prohibited call made with the arrangement for barring the transmission of prohibited numbers being overridden. The access code cannot be changed readily and only one prohibited call can be made after each access code input.

GB 2,123,254 (Answercall) shows an arrangement for selectively barring outgoing calls in which a key operated switch is used to alter the barring system. The system involves a microprocessor which holds telephone numbers, the use of which may or may not be restricted. The restrictions can only be modified or overcome by operation of the key operated switch which is associated with a telephone hand set and additional to the conventional keypad.

GB 2,133,250 (Oki Electric Industry) has a predetermined unlocking code which can overcome outgoing call restrictions which codes must be inputted when the telephone is down and the line has not been seized. This provides 20 seconds for the dialling of a prohibited number when the hand set is lifted. The arrangement does not permit code changes and is necessarily used in conjunction with a particular telephone set. The system is generally in a restrictive mode.

GB 1,579,873 (Murray) is a far more pertinent telephone line access control system based on call monitoring. Murray discloses a system in which a preselected code number can switch a telephone line access control between specific modes, i.e. inhibit normal and local. The control simulates the replacement of a handset (page 7 line 7) to prevent further dialling and to clear the call at the exchange in the appropriate circumstances. The mode changes are effected by dialling the user's own number to inhibit, thus preventing all calls. From this inhibit mode all other 7-digit codes can be used for establishing a normal (unrestricted) mode or a local mode.

Murray requires the availability of two full-length telephone numbers neither of which will in normal circumstances establish a telephone connection. In the first place Murray has suggested making use of the user's own telephone number to establish the inhibit mode and prevent all outgoing calls. Another 7-digit number is however necessary if the authorised user is to be able to release that inhibit. The most significant advance introduced by Murray is the concept that the call barring means should be latchable in either its deactivated condition or its activated condition, so that if the call barring means is deactivated, that deactivation will continue even after the next phone down operation.

The Murray system cannot change the authorisation code easily. If a security breach were to occur, resulting in unauthorised knowledge of the 7-digit code which is used to establish the normal (unrestricted) mode or the local mode, then it would be necessary to select another 7-digit telephone number that did not in itself establish a valid call connection, and the modification of the Murray device would require the factory replacement of some components. The present invention aims to overcome the above disadvantages, and provide a call monitoring system of telephone line access control which can be used more easily than the Murray system, which is user-reprogrammable, and which in one preferred embodiment uses a personal identification number (PIN) or authorisation code which is only four digits long. It is also inherent in the telephone line access control of the invention that it can be installed conveniently and used selectively.

## Summary of the Invention

According to the invention there is provided a telephone line access control for preventing unauthorized outgoing calls on that line, comprising:

a means for storing and identifying a numerical authorization code;

means for monitoring dialled signals on the line;

means for encoding the monitored signals;

means for comparing the encoded signals with the authorization code;

call barring means, including line release means, for effecting temporary line release during or on completion of dialling to prevent at least some types of outgoing calls and;

a switching control responsive to the comparing means for switching the call barring means between a deactivated condition permitting outgoing calls and an activated condition, charaterised in that;

the means for storing the numerical authorization code comprises a programmable memory;

the access control, also includes means for storing numerical access code;

the comparing means is effective also to compare the encoded signals with the access code;

the switching control is effective

(a) when the call barring means is deactivated, to switch the call barring means to its activated condition and to actuate the line release means to effect temporary line release when the comparing means indicates that the encoded signals match the access code,

(b) when the call barring means is activated, to switch the call barring means to its deactivated condition when the comparing means indicates that the encoded signals match the memorized authorization code, and

(c) whether the call barring means is activated or deactivated, to actuate the line release means to effect temporary line release when the comparing means indicates that the encoded signals match the memorized authorization code; and

reprogramming means is provided , enabled when the call barring means is in its deactivated condition and the encoded signals match the access code, for replacing the authorization code in the memory with a subsequently dialled monitored and encoded signal.

The control operates by monitoring the line and need not be associated with a particular telephone set, although it is possible for the control to be part of a set. The access control cannot be overcome by switching telephone sets if a common access control is used on the exchange line to which a number of sets in an office are connected.

The control operates in all instances by temporarily releasing the line so leaving the line available for incoming calls even if access control is activated and permitting instruction codes for the control apparatus and usual dialling codes to be differentiated.

The switching control is effective to activate the access control means in response to a dialled access code. Activation has the effect of restricting outgoing calls. By using a separate access code, activation can be effected when desired at certain times or after a number of calls have been made.

Most suitably the access code consists of one or more digits and means are provided allotting a corresponding number of dialled digit signals after line seizure to thereby permit the access code to be dialled after line seizure and before a sufficient number of digits has been reached which could permit a call to be established. Thus a short number can be used to activate, yet the occurrence of the number or its constituent digits in a dialled code cannot trigger activation unintentionally.

It is a considerable advantage that the authorisation code memorised is changeable on command. Preferably the change is accomplished as follows. First the access control means is deactivated by dialling the authorisation code (this step may be omitted if the access control means is already deactivated). Then the access code is dialled. Termination of the dialling sequence and replacing the telephone receiver at this stage causes reactivation of the access control means to prevent subsequent calls, without changing the authorisation code. However any further digits dialled after the access code become the new authorisation code and are memorised as such. It is to be noted that a new authoirsation code can be inserted only if the access control means has already been deactivated by someone with knowledge of the old authorisation code.

Preferably means are provided to ensure that continued dialling for inserting the new authorisation code leaves the access mode control means in the activated state and a means is provided for preventing the new authorisation code inputted from acting to de-activate the access mode control means. Thus after entry of the new authorisation code, a telephone can be put down with further calls only possible by dialling of the new authorisation code.

Different features of the invention are explained in more detail by reference to a description of the drawings which follow.

DRAWINGS:

Figure 1 shows schematically the overall lay-out of a telephone system including an access control system of the invention;
Figure 2 shows a block diagram of the circuit of the control system of Figure 1;
Figure 3 shows a circuit diagram of the circuit of Figure 2; and
Figure 4 shows part of the diagram of Figure 3 but modified for additional user facilities.

Description with reference to drawings/overall arrangement

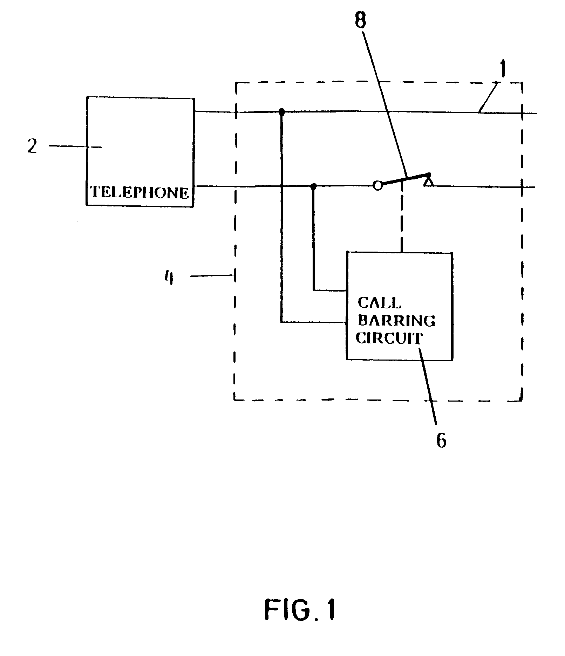

With reference to Figure 1, the telephone 2 is of conventional push-button design. At the junction box 4 a circuit 6 is provided for 'listening in' on an exchange or data line 1 to which pulses are provided as dialled outputs from the telephone. The circuit 6 may be of discrete components and externally powered. However preferably the circuit is largely of an integrated design using one or more integrated circuits as will be explained with a power consumption sufficiently low to use and operate on the exchange line power supplied to the telephone 2.

The circuit 6 operates a switch 8 for triggering line release. The switch 8 can be used for temporarily influencing the data-line to cause the network to regard any unauthorised call as terminated, causing the line to be effectively released and forcing the unauthorised user to re-dial or stop trying. It should be noted that the circuit does not itself terminate the call, although in this case it acts by briefly disconnecting the line. Any exchange in the network, of which the line forms part, reacts to the line disconnection and terminates the call with the circuit merely triggering the actual line release. The system does not interrupt incoming calls at all and need not be physically associated with a particular telephone. Thus the system does not act to disable an individual phone set totally or to block the line which it monitors. The circuit 6 and switch 8 (which may be of relay or solid state type) can be mounted in the socket at a junction box. If any attempt is made to physically remove the circuit 6, a considerable amount of work is required both in the removal and in joining the phone line, thus deterring abuse.

The circuit 6 monitors the line 1 which can serve one or more connected phone sets.

Main Circuit Functions

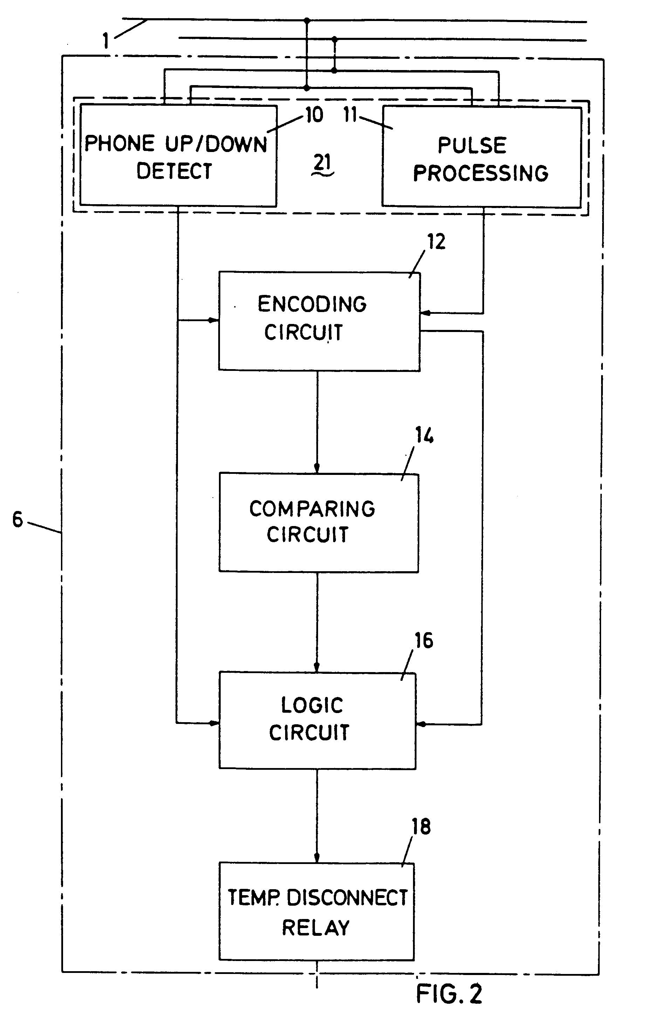

With reference to Figure 2, the circuit 6 has a series of components 21 monitoring the exchange line with the dual function of detecting whether the telephone has been picked up or put down and whether the line has hence been seized or released, and for processing input pulses dialled out on the line 1 when the line has been seized. Outputs from components 21 are supplied to encoding circuitry 12 to distinguish appropriate numbers which have been dialled out. The numbers are compared in comparison circuit 14 which, dependant on the nature of the numbers, operates logic circuitry 16 at suitable intervals. When appropriate, the logic circuitry enables various circuit components and operates a relay 18 to cause the switch 8 to trigger temporary telephone line release.

In this particular embodiment the circuit has been designed to provide certain functions and the main principles of the design are next outlined before describing the circuit 6 in detail.

The circuit 6 can be set to permit unrestricted access by dialling in an authorisation code in which case access mode control is said to be 'de-activated'. The circuit 6 can also be set to restrict access by dialling in an access code in which mode the circuit is said to be activated. In any event whether the circuit is activated or de-activated, the line is normally in a condition permitting outgoing calls (and so the passing of appropriate access or authorisation codes). The circuit 6 only causes the line to be temporarily released to prevent the completion of an attempted outgoing call when access is restricted or to prevent any dialled access or authorisation code, intended to influence the circuit 6, from being regarded by a connected telephone exchange as part of a normal dialling code. To minimise or eliminate any restriction on outgoing calls when the access mode control is 'de-activated', the access code is selected to be a short sequence of numbers which does not normally occur at the start of a dialling code, such as the UK code '1,1'. Thus effectively all numbers can be dialled without activating access control.

The circuit 6 stores the authorisation code in a random access memory. The circuit 6 hence includes components for enabling access to RAM to permit a change of code. In this particular case, the access code can be used when the circuit is in the de-activated mode to initiate a change in the authorisation code. Thus the code can only be changed by a user who has used the previously correct authorisation code, preventing unauthorised code change.

The circuit 6 is also adapted to permit emergency 999 calls at all times.

The circuit is initialised shortly after the phone has been picked up and the line has been released so that it is ineffective when the phone is put down.

Phone Use Detection

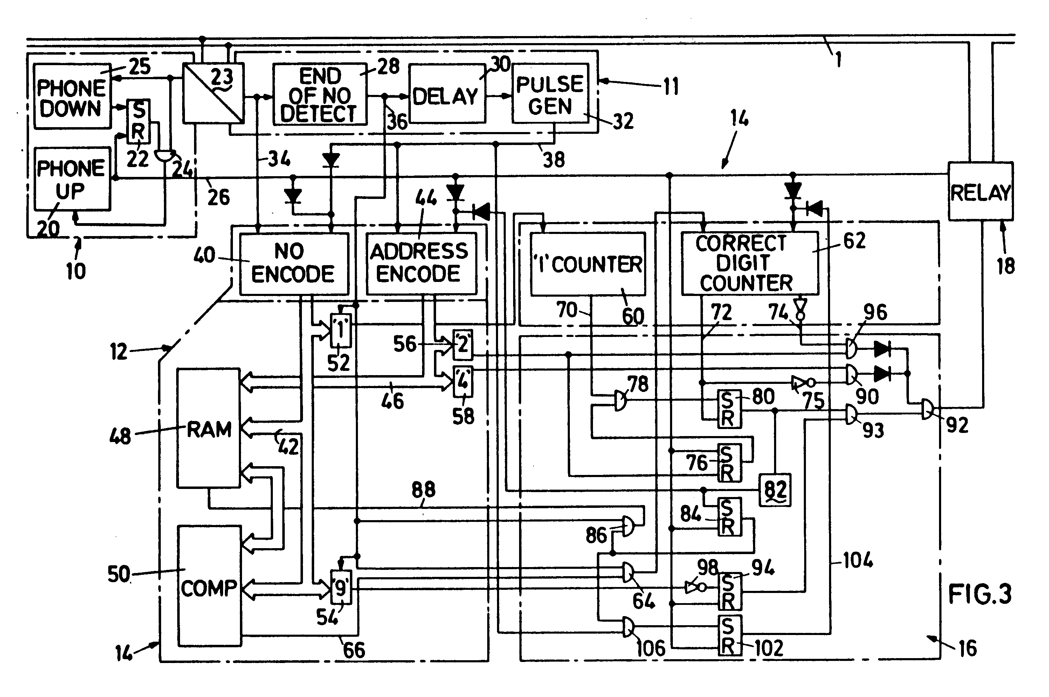

With reference to Figure 3, the circuit part 21 for monitoring line signals includes a line pulse detector and modifier 23. A line release or phone down detector 25 provides an output pulse to set a latch 22 high when the phone line is released when the phone line changes from 50 volt R.M.S. (Root Mean Square) pulse transmitting mode to a 10 V d.c. R.M.S. condition. When the phone line is seized, an AND gate 24 enabled by the latch 22 passes a signal to a line seizure or phone-up detector 20, again from the change in line condition. Following phone pick-up, a single prolonged reset pulse is passed by the phone up detector 20 along to various devices, the pulse being of a sufficient length to avoid any line noise resulting from seizing of the line. At the same time, the latch 22 is reset low until the phone line is next released. The circuit 6 can in this way be operated so that it is ready to process any monitored dialled signals from a properly initialised condition and can be made inoperative when the phone line has been released.

Pulse Processing

The circuit part 21 also shapes any data pulses and supplies an interval detector 28 which detects the end of a train of pulses (normally sent at a frequency of 10 per second) and hence, a pulse delay device 30 and a pulse generator 32. The pulse processing circuitry provides an output 34 of shaped pulses, a non-delayed end of dialled signal output 36, indicating the end of a digit, and an output 38 delayed slightly until after the end of a dialled digit. Thus clean pulses can be presented for encoding and delayed and non-delayed clockpulses can be obtained to permit the circuit to encode, read, compare and act on each successive dialled input signal.

Encoding

The encoding circuit 12 includes a number encoder 40 receiving the output 34 and outputting to a data bus 42 a binary coded number corresponding to the number of pulses in the pulse train of a line signal passed along line 1. The encoder 40 counts the pulses and outputs any binary code from representing digits from 0 to 9 to the bus. There is also provided an address encoder 44 which receives the output 38 following each dialled digit and outputs to an address bus 46 a binary coded number corresponding to the number of the dialled digits.

Comparing Circuitry

The comparing circuitry 14 includes a random access memory 48. A comparator 50 receives the digit and address of the successive digits of an authorisation code stored in the memory 48 and also the digits and address of the successive digits dialled and passed along the line 1 to compare them. The encoding circuit 12 includes a detector 52 for detecting if the dialled digit is 1, a detector 54 for detecting if the dialled digit is 9, a detector 56 to detect when two digits have been inputted and a detector 58 to detect when four digits have been inputted. The circuit 14 further includes a '1' counter 60 connected to the '1' detector 52, and a correct digit counter 62 connected through an enabling AND gate 64 with a comparator output 66. Thus each encoded dialled signal is processed to increment, if appropriate, the counters 60 and 62. When the signal corresponds to the part of the authorisation code with the same address then a correct digit pulse is provided by the comparator output 66 to increment the counter 62. The encoders 40, 44 and the counters 60 and 62 maybe of similar structure but are connected differently on the input and output side to perform their respective functions.

Logic Circuitry

The logic circuitry 16 contains a number of low power consumption latches and gates which process counter outputs 70, 72 and 74 and the condition of the detectors 52, 54, 56 and 58 so as to selectively trigger the relay 18 which actuates the switch 8 which can cause the temporary release of the telephone line 1.

Operation

Initialisation

The user picks up the telephone causing the line 1 to be seized and the circuit 6 to be initialised after a short delay to blank out noise from picking up of the phone, through the initialisation line 26.

Activation

A latch 80 of the logic circuit 16 serves to provide a bistable access mode control latch. Assuming that the circuit was last de-activated by a sequence of operations explained later, the latch 80 is in a reset condition and has a low output. In this mode AND gates 93 and 92 and relay 18 are naturally disabled. The initialisation has set a latch 76 for recording the occurrence of activation so that its output is high.

The user then dials out '1' and '1'.

The '1' counter 60 is loaded by the '1' detector 52 clocked by the 'dialled signal completed' output 36. After the second '1', the output from counter 60 goes high. An AND gate 78 is enabled by the latch 76 so that the access mode control latch 80 is reset, its output going high. Thus latch 76 and gate 78 serve as means for activating the bistable access mode control latch 80.

The two digit detector 56 goes high shortly afterwards as the address bus is clocked by the delayed 'dialled signal completed' line 38, causing the latch 76 to be reset, its output to go low and disabling the AND gate 78. Thus the latch 80 can only be set by two successive 1's without any prior digit. A dialling code containing two 1's but not at the start of a number can not activate the access mode control. A repeated dialling of '1,1' will not have the same effect as the AND gate 78 is disabled. The circuit will only process another '1,1' command after another initialisation stage during which the latch 76 is reset. The latch 76 thus records that after initialisation, the circuit 6 was changed from a de-activated to an activated mode. The two digit detector 56 and the latch 76 thus serve as means to allot two digit positions to the access code upon line seizure.

If the operator were to attempt to input 101 for example, after two digits the output 70 would still be low preventing enabling of the random access memory 48. By the time output 70 goes high, after the third digit, the two digit counter 56 has reset the latch 76 disabling the AND gate 78 and preventing opening of the memory 48. Thus dialling of codes incorporating '1's interspersed with other members will not trigger activation.

The setting of the latch 80 by the 1,1 access code also has the effect of triggering a pulse generator 82 which in turn sets a RAM access control latch 84 and clears the address encoder 44.

After activation the user can wait until he hears the 'number unobtainable' tone to ensure that activation is completed. The telephone network will generate such a 'number unobtainable' tone in response to the dialling of 1',1' in this manner because there is no such number in the United Kingdom.

The user then puts the telephone down, releasing the line 1 and ensuring that the next time the circuit monitors any dialled signals, the circuit 16 has once more been initialised following line seizure, resetting the latch 84 in the process.

Inserting an Authorisation Code

This is performed similar to activation but after activation by '1,1', the phone is not put down leaving the output of the latch 84 set high. The 'number unobtainable' tone is awaited as before. The high output of the latch 84 enables an AND gate 86. The next four digits dialled will be entered along line 1 into the RAM memory 48. The user then puts the phone down. The latch 84 next is reset but the latch 80 is still in the set condition with access control activated. Whilst inputting these four numbers the 'number unobtainable' tone will be maintained, preventing any call being established through the exchange.

From then on, outgoing calls are not possible unless the circuit 6 is de-activated as will be explained. The operation described serves to both insert the initial authorisation code and to change the authorisation code with the four dialled digits superseding the four digits previously stored in the memory 48.

If, before dialling '1,1' the latch 80 had been in the only other condition possible that is to say set with its output high and not having been de-activated, then there will be no change from low to high on the output of latch 80 triggering the pulse generator 82 and no enabling of the RAM memory 48. If '1' and '1' is dialled in this condition, the latch 76 will after initialisation, enable AND gate 78 but the generator 82 will not set the latch 84 and any number dialled will not be put into RAM 48.

The output from the RAM access control latch 80 also enables a further AND gate 102 (reset upon initialisation) whose output goes high to clear the correct digit counter 62 following setting of the latch 84 prior to authorisation code insertion. This prevents the latch 80 from being reset by the high outputs generated by the comparator 50 in coincidental fashion during this operation. If the latch 84 does not permit RAM access, the latch 102 retains its low output. The latch 102 serves as the means for preventing the new authorisation code inputted from acting to de-activate the access mode control means. Calls made subsequent to the insertion of a new authorisation code will thus be restricted.

Phone-Down

When the phone is put down and the line is released, the latch 22 is operated by the phone-down detector to set the initialisation line 26 high so as to reset all counters and encoders and to set and reset all latches as appropriate to prevent energisation of the relay 18. Thus incoming calls can pass to the telephone through line 1 without interruption. If a new authorisation code was inserted last, putting down of the phone, leaves the latch 80 in the set condition, resetting having been prevented by locking off of the correct digit counter 62 following setting of the latch 102. Thus the circuit 6 is activated whether by '1,1' command alone or by that command followed by a freshly inserted authorisation code.

Unauthorised Dialling Out

When the circuit is activated and another user next lifts the telephone, then on dialling the output 66 will go high when a number and address of the dialled number correspond to the number and address of the authorisation code in the memory 48. When the user starts dialling with any one of the first four digits not identical to the authorisation code, then after four digits, output 72 of correct digit counter 62 will still be high. An invert gate 75 thus enables an AND gate 90, the counter 62 not having received four successive pulses through output 66. When the four digit detector 58 goes high with a delay, the AND gate 90 enables the AND gate 92.

The latch 80 has a high output in the activated condition and (as will be explained) output from a latch 94 is also high, the AND gate 92 causes the relay 18 to be energised through AND gate 93. The line 1 is interrupted, causing line release, breaking the dialling sequence and forcing the user to give up or try again. Thus, unless the correct authorisation code is used, the circuit 6 will continue to be activated and prevent outgoing calls along line 1. Upon handset replacement, the phone-down detector reacts to the temporary change to re-initialise the circuit.

It is to be noted that the output of the latch 84 is low, disabling the memory 48.

Dialling codes containing three numbers could pass along line 1 before the relay 18 disconnects the line by virtue of the 4 digit detector 58 going high. To prevent this the counter 62 has an inverted output 74 which goes high when the first two digits of the authorisation code in conjunction with the two digit detector 56 and AND gate 96. Thus the line interruption may occur after the first two digits or after the four digits if the first two digits are correct and an error is contained in the last two digits. However the circuit 6 remains activated even if the first two digits have been found correct.

De-Activation

If the user dials the correct four digit authorisation code, when the circuit 6 is activated, then after the fourth correct digit the output 72 goes low, resetting the output of the access mode control latch 80 low. The counter 62 is timed by the non-delayed end of dialled signal ouptut 36 through an AND gate 64. The AND gates 90 and 96 are enabled shortly afterwards by the 2 and 4 digit detectors 56 and 58. Thus on completion of the fourth correct digit, the latch 80 is reset immediately but the outputs from AND gates 90 and 96 only go high with a short delay. Thus the relay 18 triggers release of the telephone line by the network exchange so as to end a dialling sequence prematurely as before but with the difference this time that the latch 80 is reset. Thus any dialling activity, will from now on be without interruption permitting unrestricted use of the telephone. The disconnection at the end of the de-activation by insertion of the correct authorisation code, ensures that the exchange does not treat the authorisation code as part of the dialled code for making a telephone call.

Re-Activation

To re-establish access control, the user again keys in the access code '1,1' and puts the phone down. The output of the access mode control latch 80 is once more high. Use is henceforth only permitted after dialling of the authorisation code.

Emergency Dialling

To permit dialling in emergencies when the circuit 6 is activated, emergency codes are recognised. The UK emergency code is '9','9','9' and so a simple arrangement can be used to bypass the access control and to avoid disconnection. Whenever a 9 is dialled, the 9-detector 54 will output through inverter 98 to keep the output of the AND gate 93 low, avoiding setting of a latch 94 (reset during initialisation) and preventing energisation of the relay 18. As soon as a non-9 number is dialled, the emergency code by-pass latch 94 will be set, providing a high output, enabling the AND gate 93 to pass any signals for energising the relay 18 generated in other parts of the circuit 6. Thus a 999 emergency call can be made without interruption or release of the phone line. For any other sequence of numbers, the access control system is operative.

Modifications

Whilst the latch 80 is shown set high by the access code '1,1' in modified designs the latch 80 may be set high by another access code or whenever the phone is put down or an authorised call completed. It is also possible to provide the option of removing access restrictions for one call at a time to a specified address by a special command.

The system can be refined to restrict only calls starting with 0 or 01 or other trunk or international dialling codes. Calls not commencing with such digits could be made in an unrestricted way, but whenever such a dialling code is used, the system would disconnect the call unless the latch 80 was reset by the appropriate code.

It is also possible to inject a tone to indicate that the line is a restricted access line so as to prevent a reverse charge call being made.

Once the telephone is picked up in reply to a call, the line noise interpreted by the encoding circuit could be erroneously identified as a pulse train which could accidentally trigger the relay 18 causing a brief interruption of the call. This would not result in a permanent disconnection. Suitable circuitry can be used if required to prevent accidental triggering of temporary disconnection.

Either one set or a number of sets may be connected to a single telephone line equipped with a single control, or separate access controls may be associated with each extension to provide individual access control.

Advantages

The system restricts access for any form of telephone including push button telephones. Outgoing calls only are subject to the restriction. Selected emergency numbers can be made accessible at all times. All the vital operations of activating and de-activating and changing of memorised authorisation codes can be performed using standard telephone sets, purely by monitoring line signals.

The system can be adapted for tone and frequency dialling systems. The system does not require physical linkage with the telephone set. Low power consumptions possibly with integrated circuits may permit the system to operate without external power sources. The system cannot be bypassed by switching telephone sets from socket to socket if the circuit is connected and mmounted in the junction box bringing the exchange line into a building. The system provides a high degree of access control at a relatively low level of extra effort from the user. Because the line can be left without access control (after de-activation), efficient telephone use is possible as re-activation and authorisation can be limited to when the authorised user thinks it is appropriate. It is not necessary to perform the authorisation routine at every call.

The invention can be adapted for tone dialling by appropriate modification of the encoding circuitry. In an integrated circuit form preferably separate integrated chips are provided for encoding on the one hand (whatever tone or pulse frequency dialling methods are used) and the comparator and logic circuits operated by the encoded inputs on the other hand (which may be of a common design).

The invention can also be modified - suitably by the provision of a modified comparator and logic integrated circuit chip - to provide additional user facilities. For example, a circuit can be provided with a memory for permitted numbers which may be used even when memory access control is activated. Such numbers may be those used for checking credit cards. It is also possible to postpone temporary line release when the encoded signals do not match the authorisation code to permit the use of the telephone in restricted circumstances before the call is interrupted by temporary line release. For example the unauthorised user could be allowed a short duration call before line release is triggered. Alternatively the exchange-generated charge pulses could be counted, and an unauthorized user may be permitted to make calls up to a predetermined charge limit. Either the count of charge pulses could be reset to zero each call or, preferably, the count can be cumulative so that after it reaches the predetermined limit the call in hand is terminated and all subsequent calls prevented except by the authorised user. In such a modification, means would be provided for setting or re-setting the predetermined charge limit and charge count.

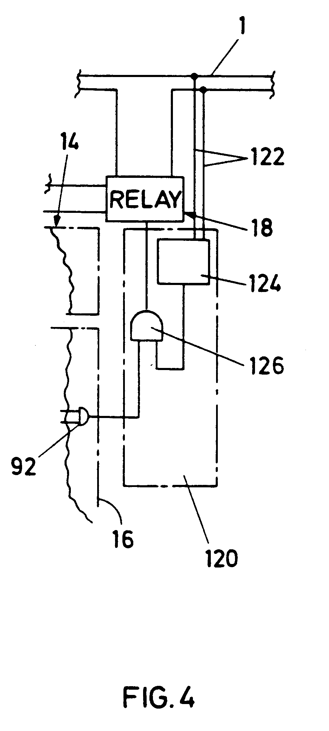

Figure 4 illustrates a possible modification to the circuit of Figure 3 for such selective dialling restriction with the access control active. A circuit 120 receives a first input from AND gate 92 to record the absence or presence of activation. Lines 122 input charge pulses transmitted over the line 1 from the exchange and trigger detector and controller 124 establishes when permitted telephone charge levels are exceeded. As soon as gate 126 has received an input from AND gate 92 and the controller 124 the relay 18 is operated for temporary line release. The controller 124 can be arranged to be programmable in a manner analogeous to RAM 48 responsible for authorisation code retention. For example the user must first input the authorisation code and then dial an access code for the memory of the controller 124 which is again not a dialling code such as '1,3'. The controller memory can then be programmed to permit a set charge level by inputting the appropriate numerical limit and then be activated. Activation could be effected by a '1,1' instruction. However preferably the same code as the access code is used to enable that particular restriction. Other time or total cumulative charge restrictions could be programmed using other two-digit numbers.

## Claims

1. A telephone line access control for preventing unauthorized outgoing calls on that line, comprising:

a means for storing and identifying a numerical authorization code;

means for monitoring dialled signals on the line;

means for encoding the monitored signals;

means for comparing the encoded signals with the authorization code;

call barring means, including line release means, for effecting temporary line release during or on completion of dialling to prevent at least some types of outgoing calls and;

a switching control responsive to the comparing means for switching the call barring means between a deactivated condition permitting outgoing calls and an activated condition, charaterised in that;

the means for storing the numerical authorization code comprises a programmable memory;

the access control, also includes means for storing numerical access code;

the comparing means is effective also to compare the encoded signals with the access code;

the switching control is effective

(a) when the call barring means is deactivated, to switch the call barring means to its activated condition and to actuate the line release means to effect temporary line release when the comparing means indicates that the encoded signals match the access code,

(b) when the call barring means is activated, to switch the call barring means to its deactivated condition when the comparing means indicates that the encoded signals match the memorized authorization code, and

(c) whether the call barring means is activated or deactivated, to actuate the line release means to effect temporary line release when the comparing means indicates that the encoded signals match the memorized authorization code; and

reprogramming means is provided , enabled when the call barring means is in its deactivated condition and the encoded signals match the access code, for replacing the authorization code in the memory with a subsequently dialled monitored and encoded signal.

2. A control according to claim 1, wherein the reprogramming means is organised to set the call barring means to its activated condition after entry of a new authorization code.

3. A control according to claim 1 or claim 2, including means for utilizing power supplied over the telephone line to power the control.

4. A control according to any preceeding claim, incorporated into a telephone line junction box or socket.

5. A control according to any preceeding claim, wherein the means for monitoring dialled signals on the line comprises means for distinguishing between pulse trains on the line and intervals between successive pulse trains to identify successive dialled digits.

6. A control according to claim 5, wherein the means for monitoring dialled signals on the line includes means for counting the number of pulses in each identified pulse train, to distinguish between different dialled digits.

7. A control according to claim 5, wherein the means for monitoring dialled signals on the line includes means for detecting the frequency of each identified pulse train, to distinguish between different dialled digits.

8. A control according to any preceding claim, further including means for monitoring the line condition to identify actuation of a telephone hook-switch, and means for initializing the call barring means when the monitored line condition indicates a transition from an off-hook to an on-hook condition.

9. A control according to claim 8, further including means for initializing the call barring means in response to a short duration initialization signal generated when or shortly after the monitored line condition indicates a transition from an on-hook to an off-hook condition.

10. A control according to claim 9, wherein the initialization signal is generated a short time delay after the monitored line condition indicates the transition from an on-hook to an off-hook condition.

11. A control according to any preceeding claim, further including means for preventing unintended connections to short dialled numbers, which means is effective, when the call barring means is activated, to activate the temporary line release means after each two dialled digits have been monitored on the line whether or not those two dialled digits match the respective pair of digits of the authorization code.

12. A control according to any preceeding claim, wherein even when activated the call barring means allows uninterrupted dialling out of the telephone number of the emergency services.

13. A call barring device for a telephone line, comprising:

means for monitoring, recognizing and encoding dialled numeric signals sent by a telephone over the line;

line release means for effecting temporary line release of the telephone line during or on completion of dialling to prevent at least some types of outgoing calls;

first number recognition means for comparing dialled numeric signals with an access code;

second number recognition means for comparing dialled numeric signals with a memorized authorization code;

mode latch means latchable in any of a number of conditions including a deactivated condition and an activated condition which corresponds to a predetermined degree of call barring;

mode control means for the mode latch means, for switching the mode latch means from its deactivated condition to an activated condition in response to recognition, by the first number recognition means, of a dialled access code corresponding to that activated condition, and for switching the mode latch means from an activated condition to its deactivated condition in response to recognition, by the second number recognition means, of the dialled authorization code;

reprogramming means for changing the memorized authorization code to a sequence of dialled numeric signals recognized by the monitoring, recognizing and encoding means, the reprogramming means being enabled in response to recognition, by the second number recognition means, of the dialled authorization code followed by recognition, by the first number recognition means, of the dialled access code; and

means for triggering the line release means when the mode latch means is in an activated condition denying access to selected telephone numbers or classes of telephone numbers and the monitoring means recognizes a dialled number to which access is to be denied, or when the mode latch means is in an activated condition and the second number recognition means recognizes the dialled authorization code, or when the mode latch means is in its deactivated condition and the first number recognition means recognizes a dialled access code, or when the reprogramming means is enabled and the monitoring means has recognized a sequence of dialled numeric signals corresponding to the newly memorized authorization code.

14. A call barring device according to claim 13, wherein the triggering means is also effective to trigger the line release means, when the mode latch means is in an activated condition, after each two dialled numeric signals recognized by the monitoring means.

**Revendications**

1. Commande d'accès à une ligne téléphonique destinée à empêcher des communications de sortie non autorisées sur cette ligne, comportant :

un moyen destiné à stocker et identifier un code numérique d'autorisation ;

des moyens destinés à contrôler des signaux composés sur la ligne ;

des moyens destinés à coder les signaux contrôlés ;

des moyens destinés à comparer les signaux codés au code d'autorisation ;

des moyens d'interdiction d'appel, comprenant des moyens de libération de ligne, destinés à effectuer une opération temporaire de libération de la ligne pendant ou à la fin d'une composition afin d'empêcher au moins certains types de communications de sortie ; et

une commande de commutation qui, en réponse aux moyens de comparaison, commute les moyens d'interdiction d'appel entre une condition désactivée permettant des communications de sortie et une condition activée, caractérisée en ce que :

les moyens destinés à stocker le code numérique d'autorisation comprennent une mémoire programmable ;

la commande d'accès comprend aussi des moyens destinés à stocker un code numérique d'accès ;

les moyens de comparaison ont également pour effet de comparer les signaux codés au code d'accès ;

la commande de commutation a pour effet
(a) lorsque les moyens d'interdiction de communication sont désactivés, de commuter les moyens d'interdiction de communication dans leur condition activée et d'actionner les moyens de libération de ligne pour effectuer une libération temporaire de la ligne lorsque les moyens de comparaison indiquent que les signaux codés concordent avec le code d'accès,

(b) lorsque les moyens d'interdiction de communication sont activés, de commuter les moyens d'interdiction de communication dans leur condition désactivée lorsque les moyens de comparaison indiquent que les signaux codés concordent avec le code d'autorisation mémorisé, et

(c) que les moyens d'interdiction de communication soient activés ou désactivés, d'actionner les moyens de libération de ligne pour effectuer une libération temporaire de ligne lorsque les moyens de comparaison indiquent que les signaux codés concordent avec le code d'autorisation mémorisé ; et

des moyens de reprogrammation sont prévus et ont la possibilité, lorsque les moyens d'interdiction de communication sont dans leur condition désactivée et que les signaux codés concordent avec le code d'accès, de remplacer le code d'autorisation dans la mémoire par un signal composé subséquemment, contrôlé et codé.

2. Commande selon la revendication 1, dans laquelle les moyens de reprogrammation sont organisés de façon à placer les moyens d'interdiction de communication dans leur condition activée après l'entrée d'un nouveau code d'autorisation.

3. Commande selon la revendication 1 ou la revendication 2, comprenant des moyens destinés à utiliser de l'énergie fournie par la ligne téléphonique pour alimenter la commande.

4. Commande selon l'une quelconque des revendications précédentes, incorporée dans une boîte ou douille de jonction de ligne téléphonique.

5. Commande selon l'une quelconque des revendications précédentes, dans laquelle les moyens destinés à contrôler les signaux composés sur la ligne comprennent des moyens destinés à distinguer entre les trains d'impulsions présents sur la ligne et des intervalles entre des trains d'impulsions successifs pour identifier des chiffres composés successifs.

6. Commande selon la revendication 5, dans laquelle les moyens destinés à contrôler des signaux composés sur la ligne comprennent des moyens destinés à compter le nombre d'impulsions dans chaque train d'impulsions identifié, afin de distinguer entre des chiffres composés différents.

7. Commande selon la revendication 5, dans laquelle les moyens destinés à contrôler les signaux composés sur la ligne comprennent des moyens destinés à détecter la fréquence de chaque train d'impulsions identifié, afin de distinguer entre des chiffres composés différents.

8. Commande selon l'une quelconque des revendications précédentes, comportant en outre des moyens destinés à contrôler la condition de la ligne pour identifier l'actionnement d'un crochet-commutateur de téléphone, et des moyens destinés à initialiser des moyens d'interdiction de communication lorsque la condition de la ligne contrôlée indique une transition d'une condition décrochée à une condition raccrochée.

9. Commande selon la revendication 8, comprenant en outre des moyens destinés à initialiser les moyens d'interdiction de communication en réponse à un signal d'initialisation de courte durée généré lorsque la condition de la ligne contrôlée indique une transition d'une condition raccrochée à une condition décrochée.

10. Commande selon la revendication 9, dans laquelle le signal d'initialisation est généré peu de temps après que la condition de la ligne contrôlée indique la transition d'une condition raccrochée à une condition décrochée.

11. Commande selon l'une quelconque des revendications précédentes, comprenant en outre des moyens destinés à empêcher des connexions non prévues sur des numéros composés courts, lesquels moyens ont pour effet, lorsque les moyens d'interdiction de communication sont activés, d'activer les moyens de libération temporaire de la ligne après le contrôle sur la ligne de chaque paire de deux chiffres composés, que ces deux chiffres composés concordent ou non avec la paire respective de chiffres du code d'autorisation.

12. Commande selon l'une quelconque des revendications précédentes, dans laquelle, même lorsqu'ils sont activés, les moyens d'interdiction de communication permettent de composer sans interruption le numéro de téléphone des services d'urgence.

13. Dispositif d'interdiction de communication pour une ligne téléphonique, comportant :

des moyens destinés à contrôler, reconnaître et coder des signaux numériques composés envoyés par un téléphone sur la ligne ;

des moyens de libération de ligne qui, lorsqu'ils sont déclenchés, réalisent une libération temporaire de la ligne téléphonique pendant une durée suffisante pour libérer la prise de la ligne ;

un premier moyen de reconnaissance de nombre destiné à comparer des signaux numériques composés à un code d'accès ;

un second moyen de reconnaissance de nombre destiné à comparer des signaux numériques composés à un code d'autorisation mémorisé ;

des moyens de verrouillage de mode pouvant être verrouillés dans l'une quelconque d'un certain nombre de conditions comprenant une condition désactivée et une condition activée qui correspond à un degré prédéterminé d'interdiction de communication ;

des moyens de commande de mode pour les moyens de verrouillage de mode, destinés à commuter les moyens de verrouillage de mode de leur condition désactivée à une condition activée en réponse à la reconnaissance, par le premier moyen de reconnaissance de nombre, d'un code d'accès composé correspondant à cette condition activée, et à commuter les moyens de verrouillage de mode d'une condition activée à leur condition désactivée en réponse à la reconnaissance, par le second moyen de reconnaissance de nombre, du code d'autorisation composé ;

des moyens de reprogrammation destinés à changer le code d'autorisation mémorisé en une séquence de signaux numériques composés reconnus par les moyens de contrôle, de reconnaissance et de codage, les moyens de reprogrammation étant validés en réponse à la reconnaissance, par le second moyen de reconnaissance de nombre, du code d'autorisation composé suivie par la reconnaissance, par le premier moyen de reconnaissance de nombre, du code d'accès composé ; et

des moyens de déclenchement des moyens de libération de ligne lorsque les moyens de verrouillage de mode sont dans une condition activée, refusant l'accès à des numéros de téléphone choisis ou à des classes de numéros de téléphone, et que les moyens de contrôle reconnaissent un numéro composé auquel un accès doit être refusé, ou bien lorsque les moyens de verrouillage de mode sont dans une condition activée et que le second moyen de reconnaissance de numéro reconnaît le code d'autorisation composé, ou bien lorsque les moyens de verrouillage de mode sont dans leur condition désactivée et que le premier moyen de reconnaissance de numéro reconnaît un code d'accès composé, ou bien lorsque les moyens de reprogrammation sont validés et que les moyens de contrôle ont reconnu une séquence de signaux numériques composés correspondant au code d'autorisation nouvellement mémorisé.

14. Dispositif d'interdiction de communication selon la revendication 13, dans lequel les moyens de déclenchement ont également pour effet de déclencher les moyens de libération de ligne, lorsque les moyens de verrouillage de mode sont dans une condition activée, après chaque paire de deux signaux numériques composés reconnus par les moyens de contrôle.

**Patentansprüche**

1. Eine Telefonleitungs-Berechtigungsprüfung zur Unterbindung von nicht berechtigten abgehenden Anrufen über diese Leitung, bestehend aus:

Mittel zum Speichern und Identifizieren eines numerischen Berechtigungscodes;

Mittel zur Überwachung von gewählten Signalen in der Leitung;

Mittel zur Verschlüsselung der erfaßten Signale;

Mittel zum Vergleich der verschlüsselten Signale mit dem Berechtigungscode;

Anrufsperrmittel, einschließlich Leitungsfreigabemittel, zur Durchführung von zeitweiliger Leitungsfreigabe während oder nach dem Wählen, um wenigstens einige Arten von abgehenden Anrufen zu unterbinden, und;

einer auf das Vergleichsmittel ansprechenden Umschaltung zum Schalten des Anrufsperrmittels zwischen einem deaktivierten Zustand, der abgehende Anrufe zuläßt, und einem aktivierten Zustand, dadurch gekennzeichnet, daß:

das Mittel zum Speichern des numerischen Berechtigungscodes auch einen programmierbaren Speicher umfaßt;

die Berechtigungsprüfung auch Mittel zum Speichern des numerischen Zugriffscodes umfaßt;

das Vergleichsmittel auch zum Vergleich der verschlüsselten Signale mit dem Zugriffscode dient;

die Umschaltung wird wirksam:

(a) wenn das Anrufsperrmittel deaktiviert wird, um das Anrufsperrmittel in seinen aktivierten Zustand zu schalten und um das Leitungsfreigabemittel zu betätigen, um eine zeitweilige Leitungsfreigabe zu ermöglichen, wenn das Vergleichsmittel meldet, daß die verschlüsselten Signale dem Zugriffscode entsprechen,

(b) wenn das Anrufsperrmittel aktiviert wird, um das Anrufsperrmittel in seinen deaktivierten Zustand zu schalten, wenn das Vergleichsmittel meldet, daß die verschlüsselten Signale dem gespeicherten Berechtigungscode entsprechen, und

(c) ob das Anrufsperrmittel aktiviert oder deaktiviert wird, um das Leitungsfreigabemittel zu betätigen, um eine zeitweilige Leitungsfreigabe zu ermöglichen, wenn das Vergleichsmittel meldet, daß die verschlüsselten Signale dem gespeicherten Berechtigungscode entsprechen; und es steht ein Umprogrammierungsmittel zur Verfügung, das dann freigegeben wird, wenn sich das Anrufsperrmittel in seinem deaktivierten Zustand befindet und die verschlüsselten Signale dem Zugriffscode entsprechen, und das zum Ersatz des Berechtigungscodes im Speicher durch ein nachträglich gewähltes, erfaßtes und verschlüsseltes Signal dient.

2. Eine Berechtigungsprüfung gemäß Anspruch 1, bei der das Umprogrammierungsmittel so eingerichtet wird, daß nach Eingabe eines neuen Berechtigungscodes das Anrufsperrmittel in seinen aktivierten Zustand geschaltet wird.

3. Eine Berechtigungsprüfung gemäß Anspruch 1 oder Anspruch 2, die auch Mittel zur Verwendung des über die Telefonleitung gespeisten Stroms als Stromversorgung für die Berechtigungsprüfung umfaßt.

4. Eine Berechtigungsprüfung gemäß einem der vorhergehenden Ansprüche, die in einem Telefonleitungs-Abzweigkasten bzw. in einer Telefonleitungs-Buchse eingebaut ist.

5. Eine Berechtigungsprüfung gemäß einem der vorhergehenden Ansprüche, bei der das Mittel zum Erfassen der gewählten Signale in der Leitung auch Mittel zur Unterscheidung zwischen Impulsserien in der Leitung und Intervallen zwischen aufeinanderfolgenden Impulsserien umfaßt, um aufeinanderfolgende gewählte Ziffern zu identifizieren.

6. Eine Berechtigungsprüfung gemäß Anspruch 5, bei der das Mittel zur Erfassung der gewählten Signale in der Leitung auch Mittel zur Erfassung der Impulszahl in jeder identifizierten Impulsserie umfaßt, um zwischen unterschiedlichen gewählten Ziffern zu unterscheiden.

7. Eine Berechtigungsprüfung gemäß Anspruch 5, bei der das Mittel zur Erfassung der gewählten Signale in der Leitung auch Mittel zur Erkennung der Frequenz jeder identifizierten Impulsserie umfaßt, um zwischen unterschiedlichen gewählten Ziffern zu unterscheiden.

8. Eine Berechtigungsprüfung gemäß einem der vorhergehenden Ansprüche, die ferner auch Mittel zur Erfassung des Leitungszustandes, um die Betätigung eines Telefonhörerschalters zu erkennen, sowie Mittel zur Initialisierung des Anrufsperrmittels umfaßt, wenn der erfaßte Leitungszustand den Übergang von einem abgehobenen in einen aufgelegten Zustand meldet.

9. Eine Berechtigungsprüfung gemäß Anspruch 8, die ferner Mittel zur Initialisierung des Anrufsperrmittels auf ein kurzzeitiges Initialisierungssignals hin umfaßt, das erzeugt wird, wenn der erfaßte Leitungszustand den Übergang von einem aufgelegten in einen abgehobenen Zustand meldet.

10. Eine Berechtigungsprüfung gemäß Anspruch 9, bei der das Initialisierungssignal mit einer kurzen Zeitverzögerung erzeugt wird, nachdem der erfaßte Leitungszustand den Übergang von einem aufgelegten in einen abgehobenen Zustand meldet.

11. Eine Berechtigungsprüfung gemäß einem der vorhergehenden Ansprüche, die ferner Mittel zur Unterbindung unbeabsichtigt zustandekommender Verbindungen mit kurz gewählten Nummern umfaßt, das wirksam wird, wenn das Anrufsperrmittel aktiviert wird, um das Mittel zur zeitweiligen Leitungsfreigabe zu aktivieren, nachdem jeweils zwei gewählten Ziffern in der Leitung erfaßt wurden, unabhängig davon, ob diese zwei gewählten Ziffern dem jeweiligen Ziffernpaar des Berechtigungscodes entsprechen oder nicht.

12. Eine Berechtigungsprüfung gemäß einem der vorhergehenden Ansprüche, bei der das Anrufsperrmittel das ungestörte Wählen der Rufnummer der Notdienste auch nach der Aktivierung weiterhin zuläßt.

13. Eine Anrufsperreinrichtung für eine Telefonleitung, bestehend aus:

einem Mittel zur Erfassung, Erkennung und Verschlüsselung von gewählten numerischen Signalen, die von einem Telefonapparat über die Leitung gesendet werden;

einem Leitungsfreigabemittel, das nach Auslösung die Telefonleitung zeitweilig für eine Dauer freigibt, die ausreicht, um die Leitungsbelegung freizugeben;

einem Erstnummer-Erkennungsmittel zum Vergleich der gewählten numerischen Signale mit einem Zugriffscode;

einem Zweitnummer-Erkennungsmittel zum Vergleich der gewählten numerischen Signale mit einem gespeicherten Berechtigungscode;

einem Modusverriegelungsmittel, das in jedem von einer Anzahl von Zuständen, auch in einem deaktivierten und in einem aktivierten Zustand, verriegelt werden kann, der einem vorbestimmten Anrufsperrgrad entspricht;

Modusansteuerungsmittel für das Modusverriegelungsmittel zum Schalten des Modusverriegelungsmittels von seinem deaktivierten Zustand in einen aktivierten Zustand auf die Erkennung durch das Erstnummer-Erkennungsmittel hin eines gewählten Zugriffscodes, der dem aktivierten Zustand entspricht, und ferner zum Schalten des Modusverriegelungsmittels von einem aktivierten Zustand in seinen deaktivierten Zustand auf die Erkennung durch das Zweitnummer-Erkennungsmittel hin des gewählten Berechtigungscodes;

Umprogrammierungsmittel zur Umwandlung des gespeicherten Berechtigungscodes in eine Reihe von gewählten numerischen Signalen, die durch die Erfassungs-, Erkennungs- und Verschlüsselungsmittel erkannt wird, wobei das Umprogrammierungsmittel auf die Erkennung durch das Zweitnummer-Erkennungsmittel des gewählten Berechtigungscodes hin freigegeben wird, mit anschließender Erkennung durch das Erstnummer-Erkennungsmittel des gewählten Zugriffscodes; und aus

Mittel zur Auslösung des Leitungsfreigabemittels, wenn sich das Modusverriegelungsmittel in einem aktivierten Zustand befindet, und den Zugriff auf ausgewählte Rufnummern bzw. ausgewählte Klassen von Rufnummern sperrt, und wenn das Erfassungsmittel eine gewählte Nummer erkennt, auf die der Zugriff zu sperren ist, oder wenn sich das Modusverriegelungsmittel in einem aktiviertn Zustand befindet, und das Zweitnummer-Erkennungsmittel den gewählten Berechtigungscode erkennt, oder wenn sich das Modusverriegelungsmittel in seinem deaktivierten Zustand befindet, und das Erstnummer-Erkennungsmittel einen gewählten Berechtigungscode erkennt, oder wenn das Umprogrammierungsmittel freigegeben wird und das Erkennungsmittel eine Reihe von gewählten numerischen Signalen erkannt hat, die dem neu gespeicherten Berechtigungscode entspricht.

14. Eine Anrufsperreinrichtung gemäß Anspruch 13, bei der das Auslösungsmittel auch wirksam wird, um das Leitungsfreigabemittel nach jeweils zwei gewählten, durch das Erfassungsmittel erkannten numerischen Signalen auszulösen, wenn sich das Modusverriegelungsmittel in einem aktivierten Zustand befindet.

14

FIG. 1

FIG. 2

FIG.3

FIG. 4